# EUROPÄISCHE PATENTSCHRIFT

(11) **EP 1 319 447 B1**
(45) Veröffentlichungstag und Bekanntmachung des Hinweises auf die Patenterteilung: **16.04.2008**
(21) Anmeldenummer: 02028283.6
(22) Anmeldetag: 17.12.2002
(51) Int. Cl.: B08B 1/02, B08B 1/04, A21B 3/16, A46B 13/02

(54) **Reinigungseinrichtung insbesondere für Backbleche**
Cleaning device, in particular for baking tins
Dispositif de nettoyage, en particulier pour des plateaux de cuisson

(30) Priorität: 17.12.2001 AT 19782001
(43) Veröffentlichungstag der Anmeldung: 18.06.2003
(73) Patentinhaber: FMT Industrieholding GmbH, 4600 Thalheim bei Wels (AT)
(72) Erfinder: Plasser, Johannes, Ing., 4600 Thalheim bei Wels (AT); Aichinger, Alois, 4600 Thalheim bei Wels (AT)
(74) Vertreter: Secklehner, Günter

(56) Entgegenhaltungen:
- DE-U- 29 805 659
- DE-U1- 8 906 864
- DE-U1- 9 413 348
- US-A- 4 774 737
- US-A- 5 687 833

## Beschreibung

Die Erfindung betrifft eine Reinigungseinrichtung, wie im Oberbegriff des Anspruches 1 beschrieben.

Aus dem deutschen Gebrauchsmuster DE 89 06 864.5 U1 ist eine Backblech- Reinigungseinrichtung mit mehreren mit Borstenreihen besetzten zylindrischen Walzenkörpern zur Reinigung von zwischen den dermaßen ausgebildeten Walzenbürsten hindurchgeführten Backblechen bekannt, um die auf den Backblechen nach deren Verwendung anhaftenden Rückstände an der Ober- und Unterseite durch den Bürstvorgang zu entfernen. Die Reinigung erfolgt trocken, d.h. ohne Zusatz von Reinigungsmittel, wobei die Verunreinigungen in einer unter den Walzenbürsten angeordneten Auffangwanne gesammelt werden und zur schnellen Reinigung der Vorrichtung und Walzenbürsten sowie zu deren raschen Austausch diese mit Antriebs- und Lagerzapfen lösbar verbunden sind. Die Hindurchführung der Backbleche durch die Putzvorrichtung erfolgt mittels paarweise angeordneten Transportwalzen, wobei sich das Problem stellt, die Backbleche mit abgewinkeltem Randbereich damit einwandfrei zu transportieren.

Aus der weiteren DE 298 05 659 U1 ist eine Backblech-Reinigungseinrichtung in Kombination mit einer im Anschluß an die Reinigungseinrichtung angeordneten Ölaufbringungsvorrichtung bekannt, bei der zusätzlich zu einem Satz walzenförmiger, schnelldrehender Reinigungsbürsten ein weiterer Satz walzenförmiger Reinigungsbürsten vorgesehen ist, die in gegenläufiger Drehbewegung und unterschiedlichen Umfangsgeschwindigkeiten betrieben werden und eine der walzenförmigen Bürsten für das Reinigen der Löcher des Backbleches ausgelegt ist. Auch bei dieser Vorrichtung umfaßt die Transportvorrichtung für die Backbleche Förderwalzen, mit denen die Förderung der im Randbereich abgewinkelten Backbleche schwierig ist.

Aus dem Dokument DE 94 13 348 U1 gemäss Oberbegriff des Anspruchs 1 ist eine Reinigungsvorrichtung für Backbleche bekannt, bei der die zu reinigenden Backbleche entlang rotierender Bürsten geführt sind und ein Teil der Bürsten auf einer in der Horizontalen zumindest in etwa senkrecht zur Transportrichtung der Backbleche bewegbaren Bürstenhalterung montiert ist, die in der Horizontalen entgegengesetzt parallel zueinander und in vertikaler Richtung bewegbar sind und deren Drehachsen der auf den Bürstenhalterungen montierten Bürsten parallel zur Flächennormalen des Backblechbodens angeordnet sind.

Das Dokument US 5,687,833 A offenbart eine Transportvorrichtung für flächige, unebene Oberflächen aufweisende Werkteile in einer horizontalen Transportebene. Die Transportmittel und Auflagen für die Werkteile werden durch angetriebene, als mit Borsten besetzte Transportrollen gebildet, die auf einem Tragrahmen in zueinander parallel verlaufenden und in der horizontalen Ebene ausgerichteten Drehachsen gelagert sind. Der Tragrahmen mit den Transportrollen ist mittels einer Höhenstelleinrichtung, zum Anheben und Absenken der Transportebene und damit der Werkteile, versehen.

Aus dem Dokument US 4,774,737 A ist eine Reinigungsvorrichtung für Tassen, z.B. Backbleche für eine automatisierte Reinigung der Oberflächen und Seitenränder von den auf parallel zueinander verlaufenden, die Reinigungsvorrichtung durchquerenden Transportbändern, durch die Anlage geförderten Tassen, bekannt. Dazu weist die Reinigungsvorrichtung eine Anzahl von kammartigen Reinigungsbürsten und rotierenden Walzenbürsten auf. Weiters sieht die Vorrichtung eine Wendestation für ein Wenden der Tassen eine zur Förderrichtung senkrecht verlaufende Achse, um zumindest 90°, für eine umfassende allseitige Reinigung der Tassen vor.

Aufgabe der Erfindung ist es nunmehr, eine Reinigungseinrichtung insbesondere für Backbleche mit abgewinkeltem Randbereichen zu schaffen, die eine für wannenförmige Backbleche verschleißarme und sichere Transportvorrichtung umfaßt und Reinigungseinrichtungen zu schaffen, mit denen sowohl die Backbleche an ihren Hauptoberflächen wie auch den Nebenoberflächen einen einwandfreien Reinigungsprozeß unterzogen werden können.

Diese Aufgabe der Erfindung wird durch die im Kennzeichenteil des Anspruches 1 wiedergegebenen Merkmale erreicht. Der überraschende Vorteil dieser erfindungsgemäßen Lösung liegt nunmehr darin, daß durch die Anwendung borstenbesetzter Transportwalzen ein sicherer Vorschub der Backbleche bei geringstem Verschleiß der Transportvorrichtung durch die Verwendung der borstenbesetzten Transportwalzen und der Einsatz von zumindest einer mit Tellerbürsten bestückten Bürstvorrichtung erreicht wird, wodurch auch kritische Bereiche der Backbleche einwandfrei von Rückständen befreit werden und damit eine nachbehandlungsfreie Verwendung der Backbleche gegeben ist.

Möglich sind aber auch Ausbildungen nach den Ansprüchen 2 und 3, weil damit noch eine zusätzliche Nachreinigung in einer der mit den Tellerbürsten bestückten Bürstvorrichtung und den daran nachgeordneten Bürstvorrichtungen erreicht wird.

Gemäß der vorteilhaften Ausbildung wie im Anspruch 4 beschrieben, wird zusätzlich zu einer hohen Reinigungsleistung durch die Wahl der Drehrichtung eine Kraftkomponente in Vorschubrichtung auf die Backbleche aufgebracht, wodurch die Vorschubvorrichtung entlastet wird.

Dabei ist eine Ausbildung nach Anspruch 5 vorteilhaft, wodurch ein sehr einfacher Maschinenaufbau erreicht wird.

Gemäß den bevorzugten Weiterbildungen wie in den Ansprüchen 6 bis 9 beschrieben, kann die Reinigungswirkung der Tellerbürsten feinfühlig justiert und hinsichtlich der Verhinderung eines frühzeitigen Verschleißes genau geregelt werden und wird eine Wartung und insbesondere der Austausch der Tellerbürsten vereinfacht.

Gemäß der Ausbildung nach Anspruch 10 wird ebenfalls eine wartungsarme Ausbildung erreicht, d.h. sowohl eine Reinigung der Walzenbürsten außerhalb der Vorrichtung wie auch insgesamt der Austausch der Walzenbürsten erleichtert.

Der Anspruch 11 kennzeichnet eine vorteilhafte Weiterbildung, mit der eine wirkungsvolle Reinigung der seitlich abgewinkelten Randbereiche der Backbleche erreicht wird.

Die bevorzugten Ausbildungen wie in den Ansprüchen 12 und 13 beschrieben, ermöglichen einen kostengünstigen Gesamtaufbau der Reinigungseinrichtung.

Schließlich sind auch Ausbildungen, wie in den Ansprüchen 14 bis 16 beschrieben möglich, wodurch bereits bei geringeren Drehzahlen der Walzenbürsten ein hohe den Reinigungseffekt bestärkende Relativgeschwindigkeit der Walzenbürsten zum Backblech erreicht wird.

Zum besseren Verständnis der Erfindung wird diese anhand der in den Figuren gezeigten Ausführungsbeispiele näher erläutert.

Es zeigen:
- Fig. 1: eine erfindungsgemäße Reinigungseinrichtung in Ansicht geschnitten, gemäß den Linien I-I in Fig. 2;
- Fig. 2: die erfindungsgemäße Reinigungseinrichtung in Draufsicht;
- Fig. 3: ein Detail der erfindungsgemäßen Reinigungseinrichtung, mit der mit Tellerbürsten besetzten Reinigungseinrichtung;
- Fig. 4: ein Detail eines Kupplungsmittels der Transportwalzen oder der Walzenbürsten;
- Fig. 5: die Kupplungsmittel, geschnitten gemäß den Linien V-V in Fig. 4.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

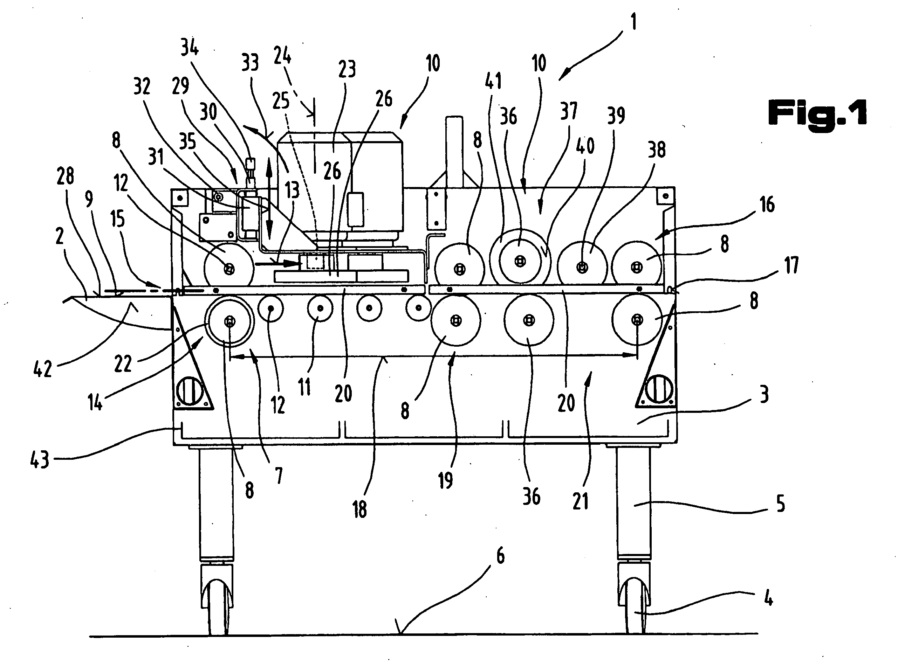

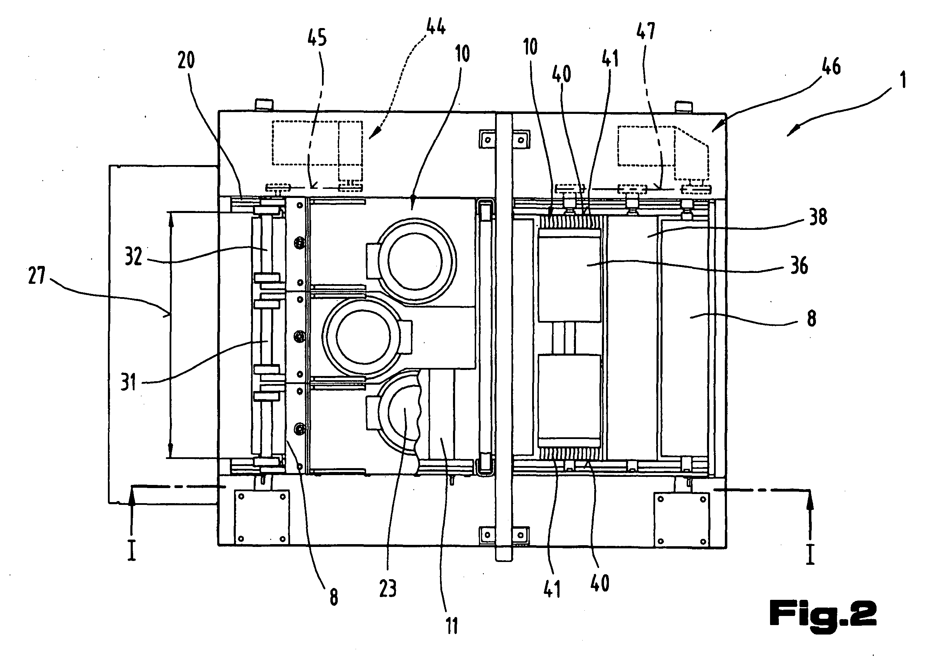

In den Fig. 1 und 2 ist eine Reinigungseinrichtung 1 insbesondere zum Reinigen von Backblechen 2 für deren Trockenreinigung in einem Durchlaufvorgang gezeigt. In einem Maschinengestell 3, welches bevorzugt über mit Laufrollen 4 versehenen Stützen 5 auf einer Aufstandsfläche 6 abgestützt ist, ist eine Transportvorrichtung 7, welche durch angetriebene Transportwalzen 8 gebildet ist, die in ihrer Anordnung für eine zur Aufstandsfläche 6 parallel verlaufende Transportebene 9 ausgelegt sind und weiters sind im Maschinengestell 3 Bürstvorrichtungen 10 angeordnet. Bevorzugt sind zwischen paarweise angeordneten Transportwalzen 8 zumindest bereichsweise zur Unterstützung der Backbleche 2 und Ausbildung der Transportebene 9 drehbar gelagerte Stützwalzen 11 vorgesehen, wobei auch Stützrollen möglich sind. Drehachsen 12 der Transportwalzen 8 und Stützwalzen 11 verlaufen parallel zur Aufstandsfläche 6 und rechtwinkelig zu einer Durchlaufrichtung, gemäß einem - Pfeil 13. In der gezeigten Ausführung besteht die Transportvorrichtung 7 aus einer Einzugs-Walzenanordnung 14 im Bereich einer Einführöffnung 15 für die Backbleche 2 in die Reinigungseinrichtung 1 und einer Ausgabe- Walzenanordnung 16, im Bereich einer Ausgabeöffnung 17 der Reinigungseinrichtung 1. Die Einzugs-Walzenanordnung 14 sowie die Ausgabe-Walzenanordnung 16 besteht jeweils aus einem Paar der Transportwalzen 8, die zwischen sich die Transportebene 9 ausbilden. Etwa im Mittel eines parallel zur Aufstandsfläche 6 gemessenen Abstandes 18 zwischen der Einzugs-Walzenanordnung 14 und der Ausgabe-Walzenanordnung 16 ist im gezeigten Ausführungsbeispiel ein weiteres Transportwalzenpaar 19 aus den Transportwalzen 8 vorgesehen. Zwischen diesem und der Einzugs-Walzenanordnung 14 sowie der Ausgabe-Walzenanordnung 16 ist zumindest je eine der Bürstvorrichtungen 10 angeordnet.

Seitlich wird die Transportebene 9 von linier verlaufenden Bürstelementen 20 begrenzt, die beim hindurchtransportieren der Backbleche 2 eine Seitenreinigung der Backbleche 2 bewirken und gleichzeitig eine seitliche Führungsanordnung 21 für die Backbleche 2 bilden.

Die Transportwalzen 8 sind erfindungsgemäß mit einem Borstenbesatz 22 versehen, von dem auf die Backbleche 2, zu deren Transport durch die Reinigungseinrichtung 1, die Vorschubkraft in Durchlaufrichtung - gemäß Pfeil 13 - aufgebracht wird. Damit wird eine einwandfreie Förderung der Backbleche 2, unabhängig von deren spezieller Randausbildung, erreicht, ohne der Aufbringen von Verformungskräften, wie sie Förderrollen aus Stahl oder auch bei mit Gummiauflage versehenen Förderwalzen nachteilig auftreten.

Die erfindungsgemäße Reinigungseinrichtung 1 weist nunmehr im Bereich zwischen der Einzugs-Walzenanordnung 14 und dem Transportwalzenpaar 19 die Bürstvorrichtung 10 auf, die aus einem Antriebsmotor 23 mit vertikal zur Aufstandsfläche 6 verlaufender Mittelachse 24 und einer auf einem Wellenstummel 25 des Antriebsmotors 23 direkt befestigten Tellerbürste 26 gebildet ist. Bevorzugt sind abgestimmt auf eine Breite 27 der zu reinigenden Backblechen 2 mehrere der mit den Tellerbürsten 26 bestückten Bürstvorrichtungen 10 zur Reinigung einer Oberseite 28 der Backbleche vorgesehen.

Der Antriebsmotor 23 ist auf einem in einer Führungsanordnung 29 und mittels einer Verstelleinrichtung 30 zur Aufstandsfläche 6 vertikal verstellbaren Schlitten 31 befestigt. Weiters ist der Schlitten 31 mit dem Antriebsmotor 23 um eine parallel zur Aufstandsfläche 6 und rechtwinkelig zur Durchlaufrichtung gemäß - Pfeil 13 - verlaufende Lagerwelle 32 um mehr als 90 ° aufschwenkbar gemäß - Pfeil 33 - gelagert. Damit wird eine freie Zugänglichkeit zum Wechseln der Tellerbürsten 26 im aufgeschwenkten Zustand oder zur Demontage für die Reinigung der Tellerbürsten 26 in einfachster Weise erreicht.

Des weiteren wird über die Verstelleinrichtung 30, die weiters mit einer Anzeigevorrichtung 34 zur Ermittlung des Verstellweges gemäß - Doppelpfeil 35 - ausgestattet ist, eine Feinpositionierung der Tellerbürsten 26, im bezug auf die Oberseite 28 der Backbleche 2, erreicht.

Im Bereich zwischen dem etwa im Mittel der Reinigungseinrichtung 1 angeordneten Transportwalzenpaar 19 und der Ausgabe-Walzenanordnung 16 ist eine weitere, durch Walzenbürsten 36 gebildete Bürstvorrichtung 10 angeordnet. Diese besteht aus einem Walzenbürstenpaar 37 mit beiderseits der Transportebene angeordneten Walzenbürsten 36 und einer näher der Ausgabe-Walzenanordnung 19 angeordneten, der Oberseite 28 zugeordneten walzenförmigen Endreinigungs-Walzenbürste 38. Die Walzenbürsten 36 sowie die Endreinigungs-Walzenbürste 38 sind ebenfalls über parallel zur Aufstandsfläche 6 und in senkrechter Richtung zur Durchlaufrichtung gemäß - Pfeil 13 - verlaufenden Drehachse 39 drehbar angetrieben. Eine Drehrichtung der Walzenbürsten 36 und der Endreinigungs-Walzenbürste 38 ist gegenläufig zur Durchlaufrichtung des Backbleches 2 gemäß - Pfeil 13. Die der Oberseite 28 zugeordnete Walzenbürste 36 ist an gegenüberliegenden Stirnenden 40 mit Topfbürsten 41 versehen mit entgegengesetzt abstehenden Borstenbesatz 22, die eine Innenreinigung an abgekanteten Seitenrändern 42 der Backbleche 2 bewirken. Diese Topfbürsten 41 sind mit der Walzenbürste 36 bewegungsverbunden.

Weiters sei noch darauf hingewiesen, daß im Maschinengestell 3 bevorzugt unterteilte Auffangwannen 43 zur Aufnahme des von den Bürstvorrichtungen 10 entfernten Rückstandes vorgesehen sind, die aus dem Maschinengestell 3 einfach entfernbar sind.

Des weiteren wird darauf hingewiesen, daß sowohl die Walzenbürsten 36 wie auch die Transportwalzen 8 einfach der Transportvorrichtung 7 und der Reinigungseinrichtung 10 entnehmbar sind, um im Falle eines Verschleißes eine rasche Wiederherstellung der Reinigungsvorrichtung 1 zu erreichen, aber auch um eine Zwischenreinigung dieser Elemente, ohne erhöhten Aufwand, vornehmen zu können.

Neben dem Antriebsmotor 23 für die mit der Tellerbürste 26 versehenen Bürstvorrichtung 10 besteht eine weitere Antriebsvorrichtung 44 für den gemeinsamen Antrieb der Transportwalzen 8 mittels eines endlosen Antriebsstranges 45, z.B. ein Riementrieb, Kettentrieb etc. sowie eine weitere Antriebsvorrichtung 46 für den gemeinsamen Antrieb der Walzenbürsten 36, die ebenfalls über einen gemeinsamen Antriebsstrang 47, z.B. Riementrieb, Kettentrieb etc., angetrieben werden.

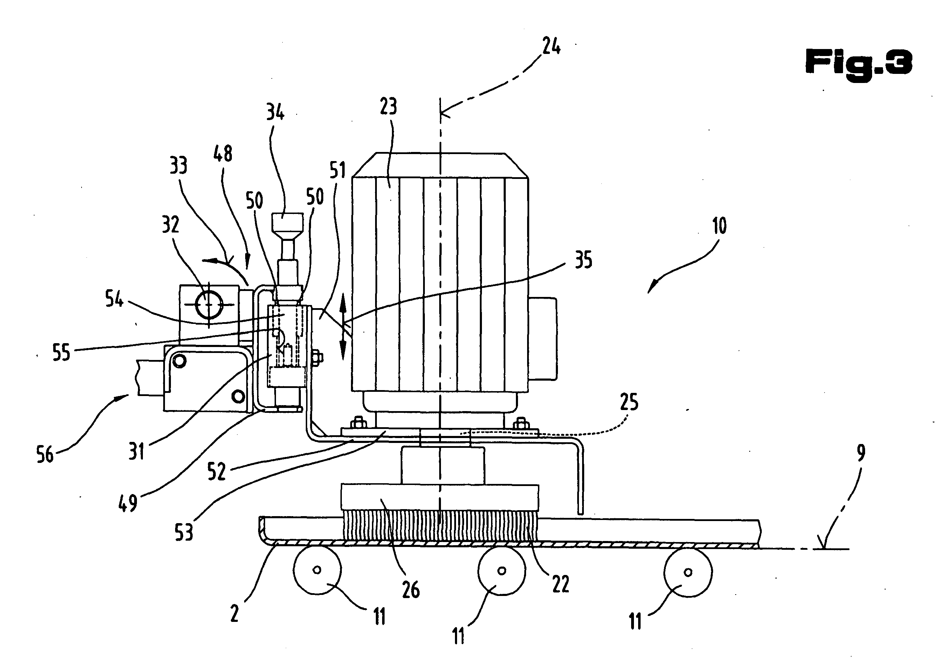

In der Fig. 3 ist nun im Detail die Bürstvorrichtung 10 mit der Tellerbürste 26, dem Antriebsmotor 23 und dem Schlitten 31 gezeigt. Auf der im Maschinengestell 3 (hier nicht dargestellt) quer zur Durchlaufrichtung befestigten Lagerwelle 32 ist verschwenkbar eine Haltevorrichtung 48 gelagert, die in einem U-förmigen Halteprofil 49 zylindrische Führungsbolzen 50 trägt, auf denen der Schlitten 31 in Verstellrichtung, gemäß - Doppelpfeil 35 - verstellbar gelagert ist. Am Schlitten 31 ist eine Tragkonsole 51 in Form eines Z-Profils befestigt. Auf einem parallel zur Transportebene 9 verlaufenden Stegblech 52 der Tragkonsole 51 ist der Antriebsmotor 23 mit einem Gehäuseflansch 53 befestigt. Der Wellenstummel 25 des Antriebsmotors 23 durchragt das Stegblech 52 und es ist auf diesem die Tellerbürste 26 unmittelbar befestigt.

Zur Verstellung des Schlittens 31 ist im Halteprofil 49 zur Aufstandsfläche 6 senkrecht ausgerichtet eine Gewindespindel 54 drehbar angeordnet, die mit einer Gewindebohrung 55 des Schlittens 31 zusammenwirkt. Demnach wird bei Betätigung der Gewindespindel 54 der Schlitten 31 mitsamt dem Antriebsmotor 23 in Verstellrichtung gemäß dem Doppelpfeil 35 verstellt.

Auf dem Schlitten 31 oder der Gewindespindel 54 ist weiters eine Anzeigevorrichtung 34 vorgesehen, mit der die Einstellung des Schlittens 31 relativ zum Halteprofil 49 ermittelt wird und damit eine Feinjustierung für die Beaufschlagung des Backbleches 2 mit der Tellerbürste 26 erreicht wird.

Bevorzugt ist im Bereich der Tellerbürste 26 das Backblech 2 auf den Stützwalzen 11 aufliegend geführt.

Weiters ist zwischen der Lagerwelle 32 und der Haltevorrichtung 48 ein Anschlag 56 vorgesehen, der einen Schwenkwinkel der Haltevorrichtung 48 begrenzt. Grundsätzlich ist vorgesehen, die Haltevorrichtung 48 und damit den Antriebsmotor 23 mit der Tellerbürste 26 in Richtung des Pfeiles 33 aufzuschwenken, wenn z.B. die Tellerbürsten 26 zu ersetzen sind oder die Vorrichtung zu reinigen ist.

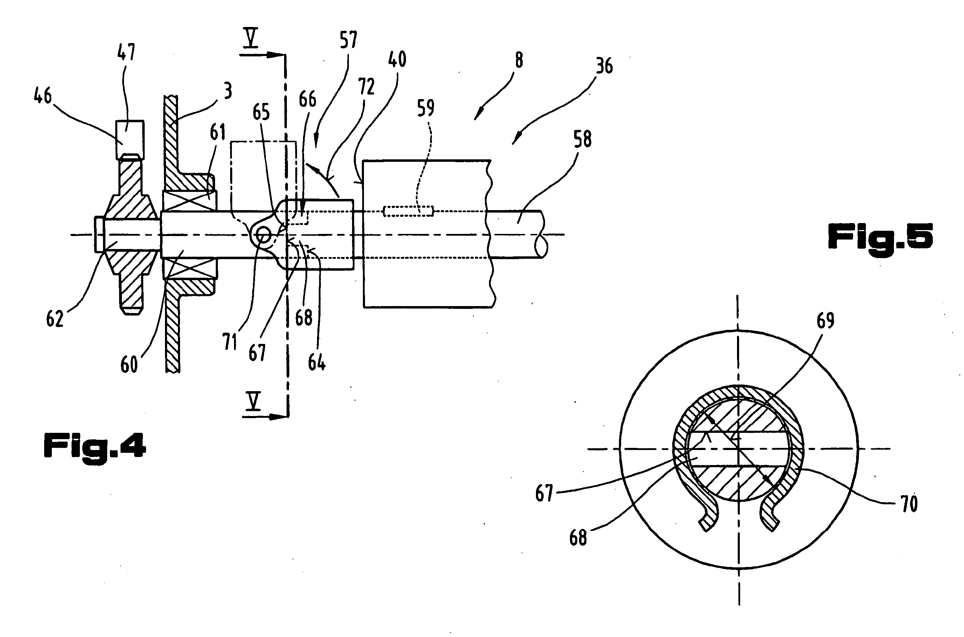

In den Fig. 4 und 5 ist im Detail die Ausbildung von Kupplungsmitteln 57 zur lösbaren Halterung der Transportwalzen 8 und/oder Walzenbürsten 36 gezeigt. Die Transportwalze 8 bzw. Walzenbürste 36 ist auf einer Durchgangswelle 58 z.B. durch einen Einlegekeil 59 drehfest gehaltert. Die Durchgangswelle 58 überragt die Stirnenden 40 der Transportwalzen 8 bzw. Walzenbürsten 36. Im Maschinengestell 3 ist ein Antriebsachsstummel 60 z.B. in einem Lager 61 drehbar gelagert. Auf dem Antriebsachsstummel 60 ist in einem vom Maschinengestell 3 auskragenden Achszapfen 62 ein Antriebsrad 63, z.B. ein Riemenrad, Kettenrad, Seilrad etc. des Antriebsstranges 45, 47 befestigt. Die Kupplungsmittel 57 zur Antriebsverbindung des Antriebsachsstummels 60 mit der Durchgangswelle 58 werden durch eine in gegenüberliegenden Stirnflächen 64, 65 ausgebildete Nut-Federanordnung 66 bewirkt, wobei eine quer über die Stirnfläche verlaufende Nut 67 des Antriebsachsstummels 60 mit einer Mitnehmerfeder 68 an der Stirnfläche 65 der Durchgangswelle 58 zusammenwirkt.

Zur achsfluchtenden Positionierung des Antriebsachsstummels 60 mit der Durchgangswelle 58 ist eine den Antriebsachsstummel 60 und die Durchgangswelle 58 an einem Außendurchmesser 69 bereichsweise umfassende Federklammer 70 vorgesehen, die z.B. am Antriebsachsstummel 60 um einen diese quer durchragenden Schwenkbolzen 71 einseitig und aufschwenkbar, gemäß einem Pfeil 72, unverlierbar gehaltert ist, wobei der Schwenkbolzen 71 in seiner Anordnung in Richtung der Längserstreckung der Mitnehmerfeder 68 im Antriebsachsstummel 60 verankert ist.

Es sei nunmehr darauf hingewiesen, daß die in den Fig. 4 und 5 beschriebenen Kupplungsmittel 57 mit Federklammern 70 zur lösbaren Halterung beidseits der Transportwalze 8 bzw. Bürstenwalze 36 angeordnet sind, wobei auf der nicht im Detail gezeigten und beschriebenen, gegenüberliegenden Ausbildung anstelle des Antriebsachsstummels 60 ein Achsstummel zur Lagerung der Durchgangswelle im Maschinengestell 3 vorgesehen ist.

Zur Entnahme der Transportwalze 8 bzw. Bürstwalze 36 zum Zwecke des Ersatzes bzw. der Reinigung, werden die Federklammern 70 beidseits aufgeschwenkt in die in strichlierten Linien gezeigte Stellung gemäß - Pfeil 72 - was durch das Auffedern der Federklammer 70 manuell und ohne Werkzeug möglich ist. Damit kann die Durchgangswelle 58 mit der Transportwalze 8 bzw. der Bürstwalze 36 durch seitliches Verschieben längs der Nut-Federanordnung 66 entnommen werden und einer Reinigung zugeführt oder ein Austausch der Transportwalze 8 bzw. Bürstwalze 36 einfach vorgenommen werden.

Der Ordnung halber sei abschließend darauf hingewiesen, daß zum besseren Verständnis des Aufbaus der Reinigungseinrichtung 1 diese bzw. deren Bestandteile teilweise unmaßstäblich und/oder vergrößert und/oder verkleinert dargestellt wurden.

### Bezugszeichenaufstellung

- 1: Reinigungseinrichtung
- 2: Backblech
- 3: Maschinengestell
- 4: Laufrollen
- 5: Stützen

- 6: Aufstandsfläche
- 7: Transportvorrichtung
- 8: Transportwalzen
- 9: Transportebene
- 10: Bürstvorrichtung

- 11: Stützwalzen
- 12: Drehachse
- 13: Pfeil
- 14: Einzugs-Walzenanordnung
- 15: Einführöffnung

- 16: Ausgabe-Walzenanordnung
- 17: Ausgabeöffnung
- 18: Abstand
- 19: Transportwalzenpaar
- 20: Bürstelement

- 21: Führungsanordnung
- 22: Borsteneinsatz
- 23: Antriebsmotor
- 24: Mittelachse
- 25: Wellenstummel

- 26: Tellerbürste
- 27: Breite
- 28: Oberseite
- 29: Führungsanordnung
- 30: Verstelleinrichtung

- 31: Schlitten
- 32: Lagerwelle
- 33: Pfeil
- 34: Anzeigevorrichtung
- 35: Doppelpfeil

- 36: Walzenbürste
- 37: Walzenbürstenpaar
- 38: Endreinigungs-Walzenbürste
- 39: Drehachse
- 40: Stirnende

- 41: Topfbürste
- 42: Seitenrand
- 43: Auffangwanne
- 44: Antriebsvorrichtung
- 45: Antriebsstrang

- 46: Antriebsvorrichtung
- 47: Antriebsstrang
- 48: Haltevorrichtung
- 49: Halteprofil
- 50: Führungsbolzen

- 51: Tragkonsole
- 52: Stegblech
- 53: Gehäuseflansch
- 54: Gewindespindel
- 55: Gewindeanordnung

- 56: Anschlag
- 57: Kupplungsmittel
- 58: Durchgangswelle
- 59: Einlegkeil
- 60: Antriebsachsstummel

- 61: Lager
- 62: Achszapfen
- 63:
- 64: Stirnfläche
- 65: Stirnfläche

- 66: Nut-Federanordnung
- 67: Nut
- 68: Mitnehmerfeder
- 69: Außendurchmesser
- 70: Federklammer

- 71: Schwenkbolzen
- 72: Pfeil

## Patentansprüche

1. Reinigungseinrichtung, insbesondere für das Trockenreinigen von Backblechen, mit einer in einem Maschinengestell angeordneten Transportvorrichtung für die Backbleche mit zumindest einer Einzugs-Walzenanordnung und einer Ausgabe-Walzenanordnung mit beiderseits zu einer Aufstandsfläche parallel verlaufenden Transportebene angeordnete, mit einem Borstenbesatz (22) versehene, Transportwalzen und mit zumindest einer zwischen der Einzugs-Walzenanordnung und der Ausgabe-Walzenanordnung angeordneten, mit einer Tellerbürste (26) für eine zu der Transportebene (9) parallele Reinigungsebene bestückten Bürstvorrichtung und mit einer weiteren im Maschinengestell (3) angeordneten, durch Walzenbürsten (36) gebildeten Bürstvorrichtung (10), **dadurch gekennzeichnet, daß** an zumindest einer Walzenbürste (36) stirnseitig, mit einem Borstenbesatz (22) in entgegengesetzter Richtung weisende, Topfbürsten (41) drehfest angeordnet sind.

2. Reinigungseinrichtung nach Anspruch 1, **dadurch gekennzeichnet, daß** etwa im Mittel zwischen der Einzugs-Walzenanordnung (14) und der Ausgabe-Walzenanordnung (16) ein Transportwalzenpaar (19) mit Transportwalzen (8) mit Borstenbesatz (22) angeordnet ist und zwischen diesem und der Einzugs-Walzenanordnung (14) und der Ausgabe-Walzenanordnung (16) zumindest je eine Bürstvorrichtung (10) angeordnet ist.

3. Reinigungseinrichtung nach Anspruch 1, **dadurch gekennzeichnet, daß** in Richtung von der Einzugs-Walzenanordnung (14) zur Ausgabe-Walzenanordnung (16) die mit der Tellerbürste (26) bestücke Bürstvorrichtung (10), gefolgt von der mit der Walzenbürste (36) bestückten Bürstvorrichtung (10), angeordnet ist.

4. Reinigungseinrichtung nach Anspruch 1, **dadurch gekennzeichnet, daß** eine Mittelachse (24), der mit der Tellerbürste (26) bestückten Bürstvorrichtung (10) senkrecht zur Transportebene (9) verläuft.

5. Reinigungseinrichtung nach Anspruch 4, **dadurch gekennzeichnet, daß** die Tellerbürste (26) direkt auf einem Wellenstummel (25) eines Antriebsmotors (23) drehfest angeordnet ist.

6. Reinigungseinrichtung nach Anspruch 5, **dadurch gekennzeichnet, daß** der Antriebsmotor (23) in zur Transportebene (9) senkrecht verlaufender Richtung verstellbar auf einem Schlitten (31) befestigt ist.

7. Reinigungseinrichtung nach Anspruch 6, **dadurch gekennzeichnet, daß** der Schlitten (31) um eine parallel zur Transportebene (9) und senkrecht zur Durchlaufrichtung verlaufenden Lagerwelle 32 verschwenkbar im Maschinengestell (3) gelagert ist.

8. Reinigungseinrichtung nach Anspruch 6, **dadurch gekennzeichnet, daß** der Schlitten (31) über eine Justiereinrichtung verstellbar ist.

9. Reinigungseinrichtung nach Anspruch 8, **dadurch gekennzeichnet, daß** die Justiereinrichtung mit einer Anzeigevorrichtung (34) versehen ist.

10. Reinigungseinrichtung nach Anspruch 1, **dadurch gekennzeichnet, daß** die Transportwalzen (8) und/oder die Walzenbürsten (36) über lösbare Kupplungsmittel mit im Maschinengestell (3) drehbar angeordneten Lager- und/oder Antriebsachsstummel (60) verbunden sind.

11. Reinigungseinrichtung nach Anspruch 1, **dadurch gekennzeichnet, daß** in der Transportebene (9) seitlich begrenzende, linear feststehende Bürstenelemente (20) im Maschinengestell (3) angeordnet sind.

12. Reinigungseinrichtung nach Anspruch 1, **dadurch gekennzeichnet, daß** die Transportwalzen (8) über eine gemeinsame Antriebsvorrichtung (44), insbesondere einem Riemen-, Kettentrieb etc., mit einem Antriebsmotor antriebsverbunden sind.

13. Reinigungseinrichtung nach Anspruch 1, **dadurch gekennzeichnet, daß** die Walzenbürsten (36) über eine gemeinsame Antriebsvorrichtung (46), insbesondere einen Riemen-, Kettentrieb etc., mit einem Antriebsmotor antriebsverbunden sind.

14. Reinigungseinrichtung nach Anspruch 1, **dadurch gekennzeichnet, daß** die Drehrichtung der Walzenbürsten (36) zur Durchlaufrichtung entgegengesetzt ist.

15. Reinigungseinrichtung nach Anspruch 1, **dadurch gekennzeichnet, daß** zwischen dem Walzenbürstenpaar (37) und der Ausgabe-Walzenanordung (16) eine Endreinigungs-Walzenbürste (38) oberhalb der Transportebene (9) angeordnet ist.

16. Reinigungseinrichtung nach Anspruch 15, **dadurch gekennzeichnet, daß** die Drehrichtung der Endreinigungs-Walzenbürste (38) zur Durchlaufrichtung entgegengesetzt ist.

## Claims

1. Cleaning device, in particular for dry cleaning baking tins, with a conveyor mechanism for the baking tins disposed in a machine frame, with at least an intake roller arrangement and a discharge roller arrangement with conveyor rollers provided with a set of bristles (22) disposed on either side of a support surface extending parallel with a conveyor plane, and at least one brush mechanism equipped with a plate brush (26) for a cleaning plane parallel with the conveyor plane (9) disposed between the intake roller arrangement and discharge roller arrangement, and with another brush mechanism (10) comprising roller brushes (36) disposed in the machine fame (3), **characterised in that** pot brushes (41) with a set of bristles (22) pointing in the opposite direction are non-rotatably disposed on the face of at least one roller brush (36).

2. Cleaning device as claimed in claim 1, **characterised in that** a conveyor roller pair (19) comprising conveyor rollers (8) with a set of bristles (22) is disposed approximately in the middle between the intake roller arrangement (14) and the discharge roller arrangement (16), and at least one brush mechanism (10) is disposed respectively between it and the intake roller arrangement (14) and the discharge roller arrangement (16).

3. Cleaning device as claimed in claim 1, **characterised in that** the brush mechanism (10) equipped with the plate brush (26) is disposed in the direction from the intake roller arrangement (14) towards the discharge roller arrangement (16), followed by the brush mechanism (10) equipped with the roller brush (36).

4. Cleaning device as claimed in claim 1, **characterised in that** a mid-axis (24) of the brush mechanism (10) equipped with the plate brush (26) extends perpendicular to the conveyor plane (9).

5. Cleaning device as claimed in claim 4, **characterised in that** the plate brush (26) is directly non-rotatably mounted on a shaft stub (25) of a drive motor (23).

6. Cleaning device as claimed in claim 5, **characterised in that** the drive motor (23) is secured to a carriage (31) so as to be adjustable in the direction perpendicular to the conveyor plane (9).

7. Cleaning device as claimed in claim 6, **characterised in that** the carriage (31) is mounted in the machine frame (3) so that it can pivot about a bearing shaft (32) extending parallel with the conveyor plane (9) and perpendicular to the throughput direction.

8. Cleaning device as claimed in claim 6, **characterised in that** the carriage (31) can be adjusted by means of an adjusting mechanism.

9. Cleaning device as claimed in claim 8, **characterised in that** the adjusting mechanism is provided with a display unit (34).

10. Cleaning device as claimed in claim 1, **characterised in that** the conveyor rollers (8) and/or the roller brushes (36) are connected by releasable coupling means to bearing and/or drive shaft stubs (60) rotatably mounted in the machine frame (3).

11. Cleaning device as claimed in claim 1, **characterised in that** linearly fixed brush elements (20) are provided in the machine frame (3) laterally bounding the conveyor plane (9).

12. Cleaning device as claimed in claim 1, **characterised in that** the conveyor rollers (8) are drivingly connected to a drive motor via a common drive system (44), in particular a belt drive, chain drive, etc..

13. Cleaning device as claimed in claim 1, **characterised in that** the roller brushes (36) are drivingly connected to a drive motor via a common drive system (46), in particular a belt drive, chain drive, etc..

14. Cleaning device as claimed in claim 1, **characterised in that** the roller brushes (36) rotate in the direction opposite the throughput direction.

15. Cleaning device as claimed in claim 1, **characterised in that** a final cleaning roller brush (38) is disposed above the conveyor plane (9) between the pair of roller brushes (37) and the discharge roller arrangement (16).

16. Cleaning device as claimed in claim 15, **characterised in that** the final cleaning roller brush (38) rotates in the direction opposite the throughput direction.

## Revendications

1. Installation de nettoyage, en particulier pour le nettoyage à sec de tôles de pâtisserie, avec un dispositif de transport disposé dans un bâti de machine pour les tôles de pâtisserie avec au moins un agencement de rouleaux d'introduction et un agencement de rouleaux d'émission avec des rouleaux de transport disposés des deux côtés d'un plan de transport s'étendant parallèlement à une face d'appui, munis d'une garniture de poils de brosserie (22) et avec au moins un dispositif de brossage disposé entre l'agencement de rouleaux d'entrée et l'agencement de rouleaux d'émission, muni d'une brosse en disque (26) pour un plan de nettoyage parallèle au plan de transport (9), et avec un autre dispositif de brossage (10) disposé dans le bâti de machine (3), formé par des brosses cylindriques (36), **caractérisée en ce que** sont disposés d'une manière solidaire en rotation, à au moins l'une des brosses cylindriques (36) du côté frontal, des brosses en pot (41) orientées avec une garniture de poils de brosserie (22) dans la direction opposée.

2. Installation de nettoyage selon la revendication 1, **caractérisée en ce qu'**à peu près au milieu entre l'agencement de rouleaux d'entrée (14) et l'agencement de rouleaux de sortie (16) est disposée une paire de rouleaux de transport (19) avec des rouleaux de transport (8) garnis de poils en brosserie (22), et **en ce qu'**est disposé entre celui-ci et l'agencement de rouleaux d'entrée (14) et l'agencement de rouleaux de sortie (16) au moins respectivement un dispositif de brossage (10).

3. Installation de nettoyage selon la revendication 1, **caractérisée en ce que** dans la direction de l'agencement de rouleaux d'entrée (14) à l'agencement de rouleaux d'émission (16) est disposé le dispositif de brossage (10) muni de la brosse en disque (26) suivie du dispositif de brossage (10) muni de la brosse cylindrique (36).

4. Installation de nettoyage selon la revendication 1, **caractérisée en ce qu'**un axe médian (24) du dispositif de brossage (10) garni de la brosse en disque (26) s'étend perpendiculairement au plan de transport (9).

5. Installation de nettoyage selon la revendication 4, **caractérisée en ce que** la brosse en disque (26) est disposée d'une manière solidaire en rotation directement sur un bout d'arbre (25) d'un moteur d'entraînement (23).

6. Installation de nettoyage selon la revendication 5, **caractérisée en ce que** le moteur d'entraînement (23) est fixé dans la direction s'étendant perpendiculairement au plan de transport (9) d'une manière ajustable sur un chariot (31).

7. Installation de nettoyage selon la revendication 6, **caractérisée en ce que** le chariot (31) est logé d'une manière pivotante dans le bâti de machine (3) autour d'un arbre de palier (32) s'étendant parallèlement au plan de transport (9) et perpendiculairement à la direction de passage.

8. Installation de nettoyage selon la revendication 6, **caractérisée en ce que** le chariot (31) est déplaçable par une installation d'ajustement.

9. Installation de nettoyage selon la revendication 8, **caractérisée en ce que** l'installation d'ajustement est munie d'un dispositif d'affichage (34).

10. Installation de nettoyage selon la revendication 1, **caractérisée en ce que** le rouleau de transport (8) et/ou les brosses cylindriques (36) sont reliés par des moyens de couplage amovibles avec des bouts d'axe de palier et/ou d'entraînement (60) aptes à tourner par des moyens de couplage amovibles dans le bâti de machine (3).

11. Installation de nettoyage selon la revendication 1, **caractérisée en ce que** sont disposés dans le plan de transport (9) des éléments de brosse (20) de délimitation latérale, linéairement fixes, dans le bâti de machine (3).

12. Installation de nettoyage selon la revendication 1, **caractérisée en ce que** les rouleaux de transport (8) sont reliés, quant à leur entraînement, par un dispositif d'entraînement (44), en particulier une commande à courroie, à chaîne etc., à un moteur d'entraînement.

13. Installation de nettoyage selon la revendication 1, **caractérisée en ce que** les brosses cylindriques (36) sont reliées, quant à leur entraînement, par un dispositif d'entraînement commun (46), en particulier une commande à courroie, à chaîne etc., à un moteur d'entraînement.

14. Installation de nettoyage selon la revendication 1, **caractérisée en ce que** la direction de rotation des brosses cylindriques (36) est opposée à la direction de passage.

15. Installation de nettoyage selon la revendication 1, **caractérisée en ce qu'**il est disposé entre la paire de brosses cylindriques (37) et l'agencement de rouleaux d'émission (16) une brosse cylindrique de nettoyage final (38) au-dessus du plan de transport (9).

16. Installation de nettoyage selon la revendication 15, **caractérisée en ce que** la direction de rotation de la brosse cylindrique de nettoyage final (38) est opposée à la direction de passage.
